(19) Europäisches Patentamt
European Patent Office
Office européen des brevets

(11) **EP 1 336 824 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
*G01G 19/02* *(2006.01)*        *G01G 19/08* *(2006.01)*
*G01C 21/34* *(2006.01)*        *G01C 21/36* *(2006.01)*

(21) Anmeldenummer: **02100140.9**

(22) Anmeldetag: **15.02.2002**

(54) **Gewichtsüberwachungssystem für ein Kraftfahrzeug**

Weight monitoring system for a motor vehicle

Système de surveillance du poids d'un véhicule automobile

(84) Benannte Vertragsstaaten:
**DE FR GB**

(43) Veröffentlichungstag der Anmeldung:
**20.08.2003 Patentblatt 2003/34**

(60) Teilanmeldung:
**07102157.0 / 1 788 363**
**07102159.6 / 1 788 364**

(73) Patentinhaber: **Ford Global Technologies, LLC**
**Dearborn, MI 48126 (US)**

(72) Erfinder:
• **Wickler, Wolfgang**
  **50321 Brühl (DE)**

• **Weyand, Wolfgang**
  **51491 Overath (DE)**

(74) Vertreter: **Drömer, Hans-Carsten et al**
**Ford-Werke Aktiengesellschaft,**
**Patentabteilung NH/DRP,**
**Henry-Ford-Strasse 1**
**50725 Köln (DE)**

(56) Entgegenhaltungen:
**EP-A- 0 769 402**        **WO-A-93/09510**
**DE-A- 4 300 677**        **US-A- 5 161 628**
**US-A- 5 438 881**

EP 1 336 824 B1

**Beschreibung**

Die Erfindung betrifft ein Gewichtsüberwachungssystem für ein Kraftfahrzeug, enthaltend mindestens einen Sensor für eine Gewichtsgröße sowie eine mit dem Sensor gekoppelte Datenverarbeitungseinheit.

Bei der Benutzung eines Kraftfahrzeugs sind aus technischen Gründen Maximalwerte für das Gesamtgewicht des Fahrzeuges und die Achslast, welche auf jeder einzelnen Achse ruht, zu beachten. Das Gesamtgewicht des Fahrzeugs setzt sich zusammen aus dem maximalen Leergewicht (reines Gewicht des Fahrzeuges plus 90% Tankfüllung plus maximale Füllung mit sonstigen Fluiden) sowie der Nutzlast (Fahrer, sonstige Insassen, Gepäck). Wenn das Kraftfahrzeug über eine Anhängerkupplung verfügt und einen Anhänger - wie etwa einen Wohnwagen - zieht, ist darüber hinaus das maximale Gesamtgewicht des Zugverbandes bestehend aus dem bereits genannten Gesamtgewicht des Fahrzeug und dem Gewicht des Anhängers zu beachten, wobei das Gewicht des Anhängers wiederum zu einer maximalen vertikalen statischen Belastung der Anhängerkupplung sowie zu einer maximalen ziehbaren Last führt. Die Maximalwerte für die genannten Gewichte sind zwar in den Fahrzeugpapieren verzeichnet, in der Praxis kennen jedoch nur wenige Benutzer die genaue Bedeutung dieser Größen, und entsprechend wenige Benutzer nehmen bei der Beladung des Fahrzeuges Rücksicht hierauf. Es kommt daher häufig vor, dass ein Fahrzeug unter Überschreitung der zugelassenen Maximalwerte überladen wird. Hierdurch können Teile des Kraftfahrzeugs über ihre Stabilitätsgrenze hinaus belastet werden, was zu kostspieligen Schäden sowie zu einer Gefährdung des Straßenverkehrs führen kann. Ferner führt eine Überladung zu einer Verschlechterung der Fahrzeugdynamik, zu einem unzureichenden Bremsvermögen, zu einer unzureichenden Kühlkapazität der verschiedenen Kühlsysteme, insbesondere auch bei Benutzung der Klimaanlage, sowie zu einem unzureichenden Verhalten bei Bergauffahrten des Fahrzeugs.

Aus der WO 87/02121 ist ein Gewichtsüberwachungssystem bekannt, welches mindestens einen Sensor für die Erfassung der Gewichtsbelastung einer Achse aufweist. Ein mit dem Sensor gekoppelter Mikroprozessor berechnet aus den Messdaten des Sensors dann gewichtsbezogene Größen wie die Achslast, das Gesamtgewicht des Fahrzeugs und die Nutzlast und stellt die genannten Größen für einen Benutzer auf einem Display abrufbar bereit. Falls der Mikroprozessor das Überschreiten einer gesetzlich zulässigen Gewichtsgrenze feststellt, gibt er eine Warnung an den Benutzer aus. Ein derartiges Gewichtsüberwachungssystem kann zwar viele Fälle einer unzulässigen Überladung des Fahrzeuges verhindern, ohne dass der Benutzer selbst hierzu komplizierte Berechnungen anstellen müsste. Dennoch weist ein derartiges System erhebliche Sicherheitslücken aufgrund der Tatsache auf, dass ein Benutzer, welcher zum Transport einer gewissen Nutzlast gezwungen ist, dies möglicherweise unter Überschreitung der Grenzwerte tun wird, und da das System nur die zum aktuellen Zeitpunkt herrschenden Bedingungen berücksichtigt, welche sich jedoch im Laufe der Fahrt ändern können.

Die EP-A-0 769 402 beschreibt eine Steuereinheit für ein Hybridfahrzeug, mit deren Hilfe eine Umschaltung zwischen einem elektrischen Antrieb, einem Verbrennungsmotor und einer gleichzeitigen Bereitstellung des elektrischen Antriebs und des Verbrennungsmotors vorgenommen werden kann. Die Steuereinheit ist in der Lage, unter Einbeziehung von Sensordaten und von Daten eines Satellitennavigationssystems, eine Vorhersage über eine demnächst benötigte Antriebsleistung für das Hybridfahrzeug vorzunehmen. Zu diesem Zweck kann die Steuereinheit Sensordaten über die Zuladung des Fahrzeugs und Daten des Satellitennavigationssystems über die demnächst auftretende Änderung einer Steigung der Strasse, auf der sich das Hybridfahrzeug fortbewegt, auswerten und für die Erstellung der Vorhersage des Bedarfs an Antriebsleistung nutzen. Dadurch ist die Steuereinheit in der Lage, entsprechend der Vorhersage beispielsweise den Verbrennungsmotor bei Annäherung an eine Steigung in Betrieb zu nehmen, um den kurz darauf eintretenden, erhöhten Bedarf an Antriebsleistung unterbrechungsfrei zur Verfügung stellen zu können.

Aus der WO A 9 309 510 geht ein Leitsystem für Kraftfahrzeuge hervor, bei dem anhand der Daten eines Satellitennavigationssystem und einem im Leitsystem hinterlegten Streckenverlauf unter Einbeziehung der Geschwindigkeit des Kraftfahrzeugs und der Fahreigenschaften des Kraftfahrzeugs eine Vorhersage über demnächst anstehende Fahrmanöver getroffen werden kann und bei einer drohenden Gefahrensituation eine Warnung an den Fahrer ausgegeben werden kann.

Die DE-A-4 300 677 beschreibt ein Verfahren zum Überwachen eines Luftdrucks und des Gewichts einer Ladung für ein Kraftfahrzeug. Dabei ist vorgesehen, anhand von Beschleunigungssensoren die Eigenfrequenz und die Dämpfung einer Kraftfahrzeug-Karosserie gegenüber einem Kraftfahrzeug-Fahrwerk zu ermitteln und anhand der ermittelten Werte einen Luftdruck in den Reifen zu ermitteln.

Vor diesem Hintergrund war es Aufgabe der vorliegenden Erfindung, ein Gewichtsüberwachungssystem für ein Fahrzeug bereitzustellen, welches einen besseren Schutz vor einer Überladung des Kraftfahrzeugs bietet, ohne den Benutzer mit komplizierten Berechnungen zu belasten. Diese Aufgabe wird durch ein Gewichtsüberwachungssystem mit den Merkmalen des Anspruchs 1 gelöst.

Vorteilhafte Ausgestaltungen sind in den Unteransprüchen enthalten.

Das erfindungsgemäße Gewichtsüberwachungssystem für ein Kraftfahrzeug enthält mindestens einen Sensor für eine Gewichtsgröße sowie eine mit dem Sensor gekoppelte Datenverarbeitungseinheit. Bei der Gewichtsgröße kann es sich insbesondere um das Gesamtgewicht des Kraftfahrzeugs, die Nutzlast des Kraftfahrzeugs, das gesamte Gewicht des Zugverbandes (Kraftfahrzeug + Anhänger), das Anhängergewicht, die vertikale Belastung der Anhängerkupplung und/oder eine Achslast handeln. Das Gewichtsüberwachungssystem ist bei einer ersten Ausführungsform der Erfindung dadurch gekennzeichnet, dass die Datenverarbeitungseinheit dahingehend ausgebildet ist, für eine geplante Fahrtroute den gemäß einer einprogrammierten Vorgabe maximal zulässigen Wert der Gewichtsgröße zu berechnen und dessen Einhaltung zu überwachen.

Die genannte Vorgabe kann insbesondere vom Fahrzeughersteller entsprechend in den in den Fahrzeugpapieren verzeichneten Angaben für maximale Nutzlast und dergleichen einprogrammiert werden. Falls gewünscht, kann die Einprogrammierung der Vorgabe jedoch auch durch den sachkundigen Benutzer selbst geschehen. Wichtig ist, dass die Datenverarbeitungseinheit bei der Überwachung der Gewichtsgröße die geplante Fahrtroute des Kraftfahrzeugs berücksichtigt. Entlang dieser Fahrtroute können sich nämlich Umgebungsbedingungen verändern, welche Einfluss auf den maximal zulässigen Wert der Gewichtsgröße oder auf die Gewichtsgröße selbst haben. Die Datenverarbeitungseinheit kann daher zu Beginn der Fahrt denjenigen maximalen Wert der Gewichtsgröße berechnen, welcher für die gesamte Fahrt das Einhalten der vorgegebenen Grenzwerte garantiert. Dies erhöht die Sicherheit des Systems gerade bei langen Fahrten wie z. B. Urlaubsfahrten erheblich. Insbesondere wird eine Situation vermieden, bei der sich erst mitten während der Fahrt plötzlich und ohne Änderungsmöglichkeit herausstellt, dass die zu Beginn der Fahrt zulässige Beladung in einer anderen Umgebung zu einer Überschreitung von zulässigen Grenzwerten führt.

Ein Beispiel für einen entlang einer Fahrtroute ortsabhängigen Grenzwert einer Gewichtsgröße sind verschiedene gesetzliche Vorschriften in verschiedenen Staaten. Besonders wichtig sind jedoch auch veränderliche physikalische oder technische Rahmenbedingungen, wozu insbesondere die Steigung beziehungsweise das Gefälle der Straße sowie die Höhe der Straße über dem Meeresspiegel gehört. Gemäß einer bevorzugten Weiterbildung weist das Gewichtsüberwachungssystem daher einen Speicher mit Navigationsdaten auf, wobei die Navigationsdaten die Steigung und/oder Höhe über dem Meeresspiegel verschiedener Fahrstrecken umfassen. Unter Rückgriff auf diesen Speicher ist es der Datenverarbeitungseinheit dann möglich, für eine geplante Fahrtroute sicherzustellen, dass das Kraftfahrzeug mit der gewählten Beladung alle auftretenden Steigungen überwinden kann, und dass es in allen Höhen über dem Meeresspiegel über eine ausreichende Motorleistung verfügt. Letztere sinkt nämlich aufgrund des abnehmenden Luftdruckes in Abhängigkeit von der Höhe, in welcher sich das Fahrzeug befindet.

Bei einer weiteren Ausgestaltung der Erfindung ist es möglich den aktuellen Standort des Fahrzeuges mittels GPS zu ermitteln und durch einen Abgleich mit dem Speicher der Datenverarbeitungseinheit den aktuellen ortsabhängigen Grenzwert für das Fahrzeug zu ermitteln. Dabei können sowohl die Höhe über dem Meeresspiegel als auch die Steigung einfließen.

Gemäß einer weiterführenden Ausbildung des Gewichtsüberwachungssystems mit mindestens einem Sensor für eine Gewichtsgröße sowie einer damit gekoppelten Datenverarbeitungseinheit ist die Datenverarbeitungseinheit dahingehend ausgebildet, optimale Werte für mindestens einen von der Gewichtsgröße abhängigen Fahrzeugparameter zu berechnen. Der berechnete Wert kann dann dem Benutzer angezeigt werden, so dass dieser eine entsprechende Einstellung des Fahrzeugparameters vornehmen kann, oder die Datenverarbeitungseinheit kann selbst über die Ansteuerung geeigneter Aktuatoren die automatische Einstellung des Fahrzeugparameters auf den optimalen Wert veranlassen. Beispiele für von einer Gewichtsgröße abhängige Fahrzeugparameter sind etwa der Reifendruck oder die Neigung der Scheinwerfer. Die optimale Einstellung derartiger Größen wird in der Praxis häufig vom Benutzer nicht vorgenommen, da dieser in der Regel weder die Notwendigkeit einer Anpassung der Größen kennt noch in der Lage ist, optimale Einstellungen hierfür zu ermitteln. Falsche Einstellungen der Fahrzeugparameter können jedoch zu einer Verschlechterung des Fahrverhaltens sowie zu einer Gefährdung des Straßenverkehrs führen. Derartige negative Auswirkungen lassen sich durch die von dar Datenverarbeitungseinheit ausgeführten Berechnungen optimaler Werte vermeiden.

Gemäß einer anderen weiterführenden Ausbildung des Gewichtsüberwachungssystems mit mindestens einem Sensor für eine Gewichtsgröße sowie einer damit gekoppelten Datenverarbeitungseinheit ist die Datenverarbeitungseinheit dahingehend ausgebildet, Vorschläge für eine derartige Änderung der aktuellen oder geplanten Fahrzeugbeladung zu berechnen, so dass der gemäß einer einprogrammierten Vorgabe maximal zulässige Wert der Gewichtsgröße eingehalten wird. Das Gewichtsüberwachungssystem beschränkt sich demnach nicht nur darauf, die Überschreitung vorgegebener Grenzwerte festzustellen und den Benutzer diesbezüglich zu warnen, sondern ermittelt darüber hinaus konstruktive Vorschläge für eine Änderung der Beladung, nach deren Ausführung die zugelassenen Grenzen wieder eingehalten werden. Insbesondere kann dabei eine andere Verteilung der Nutzlast im Fahrzeug vorgeschlagen werden, wenn (unter Einhaltung des zulässigen Gesamtgewichtes) eine unzulässige Verteilung der Achslasten vorliegt. Die Vorschläge des Gewichtsüberwachungssystems unterstützen den Benutzer bei der optimierten Ausnutzung der Transportkapazität seines Fahrzeuges und tragen zur Sicherheit in den Fällen bei, in denen der Benutzer keine Alternative zum Transport einer bestimmten Nutzlast hat, so dass er im Zweifelsfalle den Transport auch unter Überschreitung zulässiger Grenzwerte vornehmen würde.

Das Gewichtsüberwachungssystem kann insbesondere Sensoren enthalten, welche die auf jedes einzelne Rad wirkende Gewichtskraft ermitteln. Aus diesen Informationen kann dann sowohl das Gesamtgewicht als auch die jeweilige Achslast bestimmt werden. Bei den Sensoren kann es sich insbesondere um Drucksensoren bei einer pneumatischen oder hydraulischen Aufhängung der Karosserie und/oder um Abstandssensoren bei herkömmlichen Feder-Dämpfer-Aufhängungen handeln. Vorzugsweise sollte die Datenverarbeitungseinheit die Möglichkeit bieten, dass der Benutzer selbst festlegt, welcher Wert als das Ausgangsgewicht vor der Beladung des Fahrzeuges betrachtet wird. Zum Beispiel könnte der Benutzer ein aktuelles Gewicht des Fahrzeuges per Tastendruck als Ausgangsgewicht definieren. Sobald das Fahrzeug beladen wird, kann die Differenz der Achslasten aus den Sensorsignalen bestimmt werden. Wenn sich dabei eine unzulässige Verteilung der Achslasten herausstellt, kann das System wie vorstehend erläutert dem Benutzer Vorschläge für eine andere Verteilung der Lasten im Bereich Front/Rücksitze/Kofferraum unterbreiten.

Gemäß einer anderen Weiterentwicklung des Gewichtsüberwachungssystems enthält dieses einen in der Anhängerkupplung des Kraftfahrzeugs angeordneten Zugkraftsensor sowie einen Beschleunigungssensor, wobei die Datenverarbeitungseinheit mit den genannten Sensoren gekoppelt und dahingehend ausgebildet eingerichtet ist, aus der vom Zugkraftsensor gemessenen Zugkraft und aus der vom Beschleunigungssensor gemessenen Beschleunigung des Kraftfahrzeugs das Gewicht des Anhängers zu berechnen. Da die auf den Anhänger wirkende Zugkraft das Produkt aus Masse des Anhängers und der aktuellen Beschleunigung ist, kann aus der Kenntnis zweier dieser Größen die unbekannte dritte Größe, vorliegend die Masse des Anhängers, bestimmt werden. Vorteilhaft bei der vorgeschlagenen Anordnung ist, daß lediglich im Kraftfahrzeug selbst Sensoren vorzusehen sind, nicht jedoch im Anhänger. Das Gewichtsüberwachungssystem kann daher mit jedem beliebigen Anhänger gekoppelt werden und gleichwohl die genaue Berücksichtigung des Anhängergewichts bei der Bestimmung aktueller und zulässiger Gewichtswerte erlauben.

Vorzugsweise enthält das Gewichtsüberwachungssystem eine Anzeigevorrichtung wie etwa eine Flüssigkristallanzeige zur Darstellung von Benutzerinformationen. Zu den Informationen für den Benutzer können dabei insbesondere die gemessenen Gewichtsgrößen oder Vorschläge für eine Änderung der Beladung gehören. Ferner sollte die Anzeigevorrichtung die Darstellung von Warnhinweisen und/oder die Abgabe akustischer Warnmeldungen erlauben, damit der Benutzer auf eine festgestellte Überschreitung zulässiger Gewichtsgrenzen hingewiesen werden kann.

Weiterhin kann die Datenverarbeitungseinheit mit einer Eingabeeinheit wie zum Beispiel einer Tastatur gekoppelt sein, über welche Benutzereingaben wie etwa eine geplante Fahrtroute und/oder eine geplante Beladung des Fahrzeuges eingegeben werden können. Die Eingabe einer geplanten Fahrtroute kann das System dazu verwenden, die zulässige Beladung über den gesamten Verlauf der Route zu berechnen. Durch die Eingabe einer geplanten Beladung und eine entsprechende Einrichtung (Programmierung) der Datenverarbeitungseinheit kann ferner erreicht werden, daß das Gewichtsüberwachungssystem die Zulässigkeit einer geplanten Beladung "theoretisch" überprüft und den Benutzer auf eventuelle Gewichtsüberschreitungen hinweist beziehungsweise Änderungsvorschläge unterbreitet. Der Benutzer kann somit vorab eine bestimmte Fahrtroute und/ oder Beladung auf ihre Durchführbarkeit hin überprüfen lassen, ohne darauf angewiesen zu sein, die Beladung erst tatsächlich am Fahrzeug vorzunehmen und dann gegebenenfalls zu korrigieren.

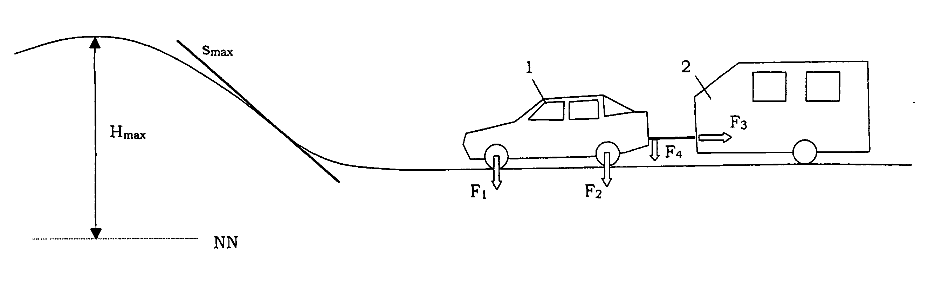

Im Folgenden wird die Erfindung anhand Hilfe der Figur sowie anhand von Beispielen näher erläutert.

Die einzige Figur zeigt schematisch ein Kraftfahrzeug mit dem erfindungsgemäßen Gewichtsüberwachungssystem.

Das in dem Kraftfahrzeug 1 befindliche Gewichtsüberwachungssystem umfaßt als Datenverarbeitungseinheit einen Mikrocomputer (nicht dargestellt), welcher Meßsignale von Kraftsensoren (nicht dargestellt) an den Rädern sowie an einer Anhängerkupplung erhält. Die Kraftsensoren messen dabei die auf die Vorderachse bzw. die Räder der Vorderachse wirkende Gewichtskraft $F_1$, die auf die Hinterachse bzw. die Räder der Hinterachse wirkende Gewichtskraft $F_2$, sowie die an der Anhängerkupplung wirkende und auf einen Wohnwagenanhänger 2 ausgeübte Zugkraft $F_3$. Der Mikrocomputer ist derart programmiert, daß er aus den Kräften $F_1$ und $F_2$ das Gesamtgewicht des Kraftfahrzeugs 1 berechnen kann. Ferner ist in einem Speicher des Mikrocomputers das Leergewicht des Kraftfahrzeugs (zum Beispiel vom Hersteller oder durch Eingabe des Benutzers) abgelegt, so daß der Mikrocomputer aus der Differenz zwischen Gesamtgewicht und Leergewicht die im Kraftfahrzeug 1 befindliche Nutzlast berechnen kann. Des Weiteren geben die Kräfte $F_1$ und $F_2$ unmittelbar die Verteilung des Gewichts auf die beiden Achsen an.

Wenn wie im darstellten Fall ein Zugverband bestehend aus dem Kraftfahrzeug 1 und einem daran angekoppelten Anhänger 2 vorliegt, benötigt das Gewichtsüberwachungssystem noch die Kenntnis der Masse des Anhängers 2. Diese wird im dargestellten Beispiel vom Kraftfahrzeug aus gemessen, indem während einer (Probe-)Fahrt die auf den Anhänger 2 ausgeübte Zugkraft $F_3$ und gleichzeitig die Geschwindigkeitsänderung (Beschleunigung) mit Hilfe eines Beschleunigungsmessers (nicht dargestellt) im Kraftfahrzeug 1 gemessen wird.

Weiterhin kann in der Anhängerkupplung ein Kraftsensor für die vertikale statische Kraftbelastung $F_4$ integriert sein. Zusammengefaßt sind bei einem Zugverband somit die folgenden Gewichte zu unterscheiden:

Gesamtes Gewicht des Zugverbandes, bestehend aus

- Anhängergewicht, mit

  -- statischer vertikaler Belastung

  -- ziehbarem Gewicht

- Gesamtem Fahrzeuggewicht, bestehend aus

  -- maximalem Leergewicht (Grundleergewicht + maximale Masse an Fluiden wie Öl etc. + Masse einer 90%igen Tankfüllung)

  -- Nutzlast (Fahrer, Mitfahrer, Gepäck, vertikale Anhängelast).

Zum Schutz des Fahrzeuges und seiner Bauteile vor einer Überlastung sowie zur Gewährleistung der Verkehrssicherheit ist es erforderlich, daß das Kraftfahrzeug nur bis zu vorgegebenen Grenzwerten belastet wird. Dabei ist der durchschnittliche Benutzer in der Regel völlig damit überfordert, die Einhaltung der Maximalwerte für die oben definierten Gewichtsgrößen zu kontrollieren. Erfindungsgemäß werden daher die aktuellen Werte aller relevanten Gewichtsgrößen von dem Gewichtsüberwachungssystem mit Hilfe der bereits erwähnten Sensoren automatisch ermittelt und mit den vorgegebenen Grenzwerten verglichen. Sofern das Gewichtsüberwachungssystem eine Überschreitung eines Grenzwertes feststellt, weist es den Benutzer über eine optische und/oder akustische Anzeigevorrichtung (nicht dargestellt) hierauf hin. Dabei kann das System insbesondere auch Vorschläge für eine Änderung der Beladung unterbreiten, welche wieder in den zulässigen Bereich hineinführt. Dies gilt insbesondere in den Fällen, in denen eine ungünstige Achsbelastung vorliegt, die durch eine andersartige Verteilung der Nutzlast korrigiert werden könnte.

Weiterhin ist das Gewichtsüberwachungssystem vorzugsweise derart eingerichtet, daß es auch vom Benutzer eingegebene geplante Beladungen verarbeiten und auf ihre Zulässigkeit überprüfen kann. Der Benutzer kann daher vorab die Beladung planen, was unangenehme Überraschungen während des eigentlichen Ladevorganges verhindert.

In der Figur ist ferner schematisch der Höhenverlauf einer geplanten Fahrtroute dargestellt. Dabei sind für die Zwecke der Gewichtsüberwachung insbesondere Höhen über dem Meeresspiegel (NN) sowie Steigungen im Verlauf der Fahrstrekke von Interesse. Die Höhe über dem Meeresspiegel wirkt sich nämlich durch den reduzierten Luftdruck auf die Leistungsfähigkeit des Motors aus, während die Steigung der Strecke die vom Kraftfahrzeug 1 geforderte Zugleistung bestimmt. Das erfindungsgemäße Gewichtsüberwachungssystem ist daher derart eingerichtet, daß der Benutzer über eine Schnittstelle beziehungsweise Eingabevorrichtung sein Fahrtziel oder die geplante Fahrtroute eingeben kann. Vorzugsweise ist hierzu das Gewichtsüberwachungssystem mit einem Navigationssystem vernetzt. Das Gewichtsüberwachungssystem ermittelt dann mit Hilfe gespeicherter oder abgefragter Daten die auf der geplanten Fahrtroute erreichten Höhen über dem Meeresspiegel NN, insbesondere die maximale Höhe $H_{max}$, sowie die Steigungen, insbesondere die maximale Steigung $s_{max}$. Diese beiden Größen legen über bekannte funktionale Zusammenhänge oder gespeicherte Tabellen die Maximalwerte für verschiedene Gewichtsgrößen fest, so daß das Gewichtsüberwachungssystem von Werten ausgehen kann, die eine Einhaltung zulässiger Grenzen über die gesamte Fahrtroute gesehen erlauben. Hierdurch wird vermieden, daß das Gewichtsüberwachungssystem beim Start einer längeren Fahrt von Verhältnissen ausgeht, die sich im Laufe der Fahrt erheblich ändern und dabei zu einer Überschreitung zulässiger Gewichtsgrenzen durch die aktuelle Beladung führen können.

Die Bedeutung der Berücksichtigung einer geplanten Fahrtroute wird nachfolgend durch zwei Beispiele illustriert.

Beispiel 1:

Als Kraftfahrzeugtyp wird ein fünftüriger Ford Mondeo mit Automatikgetriebe und 2.0 l4 Motor mit 106 kW (145 PS) betrachtet. Ferner wird davon ausgegangen, daß eine Familie (zwei Erwachsene: 150 kg; zwei Kinder: 100 kg) von Köln ausgehend einen Urlaub in Italien unter Mitnahme ihres Wohnwagens plant. Dabei sollen zwei Surfbretter mit Segeln (60 kg) auf dem Dach sowie Gepäck für vier Personen (insgesamt 100 kg) transportiert werden. Als Fahrtrouten kommen alternativ die Brennerautobahn und die Großglocknerstraße in Betracht.

Ausgehend von diesen Vorgaben bestehen folgende Fragestellungen:

a) Wie groß ist die zugelassene Nutzlast und die tatsächliche Nutzlast des Fahrzeuges?

b) Wie groß ist das zulässige Anhängergewicht bei der tatsächlichen Nutzlast für die beiden in Betracht gezogenen Fahrtrouten?

Zu a): Das in den Fahrzeugpapieren verzeichnete und in dem Gewichtsüberwachungssystem einprogrammierte Leergewicht des Fahrzeuges ist bekannt und betrage 1476 kg. Auch das maximale Gesamtgewicht des Kraftfahrzeugs ist vorgegeben mit 1910 kg. Die zugelassene Nutzlast beträgt daher 1910 kg- 1476 kg = 434 kg.

Die tatsächliche Nutzlast beträgt (150 kg + 100 kg + 100 kg + 60 kg) = 410 kg.

Zu b): Aus der tatsächlichen Nutzlast und dem Leergewicht berechnet sich das tatsächliche Gesamtgewicht des Fahrzeuges zu (410 kg + 1476 kg) = 1886 kg.

Das maximale Anhängergewicht kann den Fahrzeugpapieren entnommen werden beziehungsweise ist im Gewichtsüberwachungssystem eingespeichert und beträgt 1800 kg. Ebenso ist das maximale Gesamtgewicht des Zugverbandes (Kraftfahrzeug + Anhänger) bekannt und beträgt 3460 kg. Das theoretische maximale Anhängergewicht bei maximalem gesamten Fahrzeuggewicht beträgt daher (3460 kg - 1910 kg) = 1550 kg.

> 1. Alternative "Brennerautobahn": Die maximale Höhe entlang der Brennerautobahn wird entsprechenden Datenbanken entnommen und beträgt 1376 m über dem Meeresspiegel. Gemäß der Vorgaben des Fahrzeugherstellers sind für jedes angefangene 1000 m Intervall oberhalb von 1000 m über dem Meer 10% vom maximal zulässigen Gesamtgewicht des Zugverbandes abzuziehen. Dies führt vorliegend zu einem maximalen Gesamtgewicht des Zugverbandes von (3460 kg 0,9) = 3114 kg. Das maximal zulässige Anhängergewicht kann daher wie folgt berechnet werden: 3114 kg - 1886 kg (tatsächliches gesamtes Fahrzeuggewicht) = 1228 kg.

> 2. Alternative "Großglocknerstraße": Die maximale Höhe über dem Meeresspiegel beträgt hier 2300 m, so daß sich unter Anwendung der "10%-Regel" ein maximales gesamtes Gewicht des Zugverbandes von (3460 kg · 0,8) = 2768 kg ergibt. Das maximal zulässige Anhängergewicht kann daher wie folgt berechnet werden: 2768 kg - 1886 kg (tatsächliches gesamtes Fahrzeuggewicht) = 882 kg.

Obige Berechnungen gelten unter der Voraussetzung, daß die maximale Steigung auf den Strecken weniger als 12% beträgt. Zur weiteren Präzisierung der Berechnungen kann zusätzlich die tatsächliche maximale Steigung auf den Strecken berücksichtigt werden.

Das Beispiel zeigt, daß die Familie einen um ca. 1000 kg zu schweren Anhänger verwendet hätte, wenn sie sich nur an dem in den Fahrzeugpapieren angegebenen maximal zulässigen Anhängergewicht von 1880 kg orientiert und als Fahrtroute die Großglocknerstraße gewählt hätte. Es liegt auf der Hand, daß mit dieser erheblichen Überbelastung des Fahrzeuges ein großes Sicherheitsrisiko verbunden gewesen wäre.

Beispiel 2:

Als Kraftfahrzeugtyp wird wiederum ein fünftüriger Ford Mondeo mit Automatikgetriebe und 2.0 14 Motor mit 106 kW (145 PS) betrachtet. Ein in Österreich auf 1300 m über dem Meeresspiegel wohnender Mann (85 kg) beabsichtige, unter Verwendung eines Anhängers zu einem Baustoffhandel zu fahren und von dort so viele Zementsäcke ä 40 kg mitzunehmen wie möglich. Alternativ steht ihm ein Anhänger ohne aktive Bremse und ein Anhänger mit aktiver Bremse zur Verfügung. Ausgehend von diesen Vorgaben bestehen folgende Fragestellungen:

> a) Wie viele Zementsäcke können in das Fahrzeug geladen werden?

> b) Wie viele Zementsäcke können in den Anhänger geladen werden?

Zu a): Das in den Fahrzeugpapieren verzeichnete und in dem Gewichtsüberwachungssystem einprogrammierte Leergewicht des Fahrzeuges ist bekannt und betrage 1476 kg. Auch das maximale Gesamtgewicht des Kraftfahrzeugs ist vorgegeben mit 1910 kg. Die zugelassene Nutzlast beträgt daher 1910 kg-1476 kg = 434 kg.

Die zulässigen Achslasten können ebenfalls in den Fahrzeugpapieren nachgelesen werden beziehungsweise sind im Gewichtsüberwachungssystem gespeichert und betragen für die Vorderachse wie für die Hinterachse jeweils 985 kg. In gleicher Weise ist für die maximale vertikale Belastung der Anhängerkupplung der Wert 75 kg bekannt.

Das erfindungsgemäße Gewichtsüberwachungssystem ermöglicht es dem Fahrer, das Überschreiten einer maximalen Achslast festzustellen. Dies wäre ohne eine Messung der tatsächlichen Kräfte an den Achsen nicht möglich.

Die maximal mögliche Zement-Nutzlast beträgt:

$$434 \text{ kg} - 85 \text{ kg (Fahrer)} = 349 \text{ kg.}$$

Es können daher maximal acht Säcke Zement mit insgesamt 320 kg Gewicht in das Fahrzeug geladen werden. Dabei besteht jedoch eine erhebliche Gefahr, daß der Fahrer die zulässige Achslast an der Hinterachse überschreitet. Dies zu verhindern, ist ihm allein mit Hilfe des erfindungsgemäßen Gewichtsüberwachungssystems und der getrennten Beobachtung der Achslasten möglich.

Zu b): Die gemäß obigen Berechnungen sich ergebende tatsächliche Nutzlast beträgt (320 kg + 85 kg) = 405 kg. Das tatsächliche Gesamtgewicht des Fahrzeuges hat daher den Wert (405 kg + 1476 kg) = 1881 kg.

Das maximale Anhängergewicht kann in den Fahrzeugpapieren nachgelesen werden beziehungsweise ist im Gewichtsüberwachungssystem eingespeichert und beträgt 1800 kg. Ebenso ist das maximale Gesamtgewicht des Zugverbandes (Kraftfahrzeug + Anhänger) bekannt und beträgt 3460 kg. Das theoretische maximale Anhängergewicht bei maximalem gesamten Fahrzeuggewicht beträgt daher (3460 kg - 1910 kg) = 1550 kg. Da der Mann jedoch höher als 1000 m über dem Meeresspiegel lebt, sind 10% vom maximal erlaubten gesamten Gewicht des Zugverbandes abzuziehen, was zu einem Wert von 3114 kg führt.

1. Alternative "Anhänger ohne aktive Bremse": Das Leergewicht des Anhängers betrage 200 kg. Das maximale Anhängergewicht für Anhänger ohne aktive Bremse kann den Fahrzeugpapieren entnommen werden beziehungsweise ist im Gewichtsüberwachungssystem gespeichert und beträgt 710 kg. Parallel hierzu muß das maximale Anhängergewicht aus dem maximal zulässigen gesamten Gewicht des Zugverbandes und dem tatsächlichen Fahrzeuggewicht berechnet werden: (3114 kg - 1881 kg) = 1233 kg. Der kleinere dieser beiden Gewichtswerte stellt dann die zu beachtende Größe des maximalen Anhängergewichtes dar, so daß dieses vorliegend 710 kg beträgt.

Die maximal zulässige Nutzlast des Anhängers ergibt sich somit zu (710 kg - 200 kg) = 510 kg, was einer maximalen Beladung des Anhängers mit 12 Sack Zement (480 kg) entspricht.

2. Alternative "Anhänger mit aktiver Bremse": Das Leergewicht des Anhängers betrage 350 kg. Das maximale Anhängergewicht für Anhänger mit aktiver Bremse kann den Fahrzeugpapieren entnommen werden beziehungsweise ist im Gewichtsüberwachungssystem gespeichert und beträgt 1800 kg. Parallel hierzu muß wiederum das maximale Anhängergewicht aus dem maximal zulässigen gesamten Gewicht des Zugverbandes und dem tatsächlichen Fahrzeuggewicht berechnet werden: (3114 kg - 1881 kg) = 1233 kg. Der kleinere dieser beiden Gewichtswerte stellt dann die zu beachtende Größe des maximalen Anhängergewichtes dar, so daß dieses vorliegend 1233 kg beträgt.

Die maximal zulässige Nutzlast des Anhängers ergibt sich somit zu (1233 kg - 350 kg) = 883 kg, was einer maximalen Beladung des Anhängers mit 22 Sack Zement (880 kg) entspricht.

Obige Berechnungen gelten unter der Voraussetzung, daß die maximale Steigung auf der Fahrstrecke weniger als 12% beträgt. Hätte sich der Fahrer nur am theoretischen maximalen Gesamtgewicht des Anhängers mit aktiver Bremsung orientiert, hätte er diesen um ca. 570 kg überladen, was eine erhebliche Belastung und ein großes Sicherheitsrisiko dargestellt hätte.

**Patentansprüche**

1. Gewichtsüberwachungssystem für ein Kraftfahrzeug (1), enthaltend mindestens einen Sensor für eine Gewichtsgröße ($F_1$, $F_2$) sowie eine damit gekoppelte Datenverarbeitungseinheit, **dadurch gekennzeichnet, dass** die Datenverarbeitungseinheit dahingehend ausgebildet ist, für eine geplante Fahrtroute den gemäß einer einprogrammierten Vorgabe maximal zulässigen, ortsabhängigen Wert der Gewichtsgröße ($F_1$, $F_2$) zu berechnen und dessen Einhaltung zu überwachen.

2. Gewichtsüberwachungssystem nach Anspruch 1, **dadurch gekennzeichnet, dass** dieses einen Speicher mit Navigationsdaten enthält, um für eine vorgegebene Fahrtroute die jeweilige Steigung und/oder Höhe über dem Meeresspiegel ermitteln zu können.

3. Gewichtsüberwachungssystem nach Anspruch 2, **dadurch gekennzeichnet, dass** dieses eine GPS-Einheit benutzt, um den aktuellen Standort zu ermitteln.

4. Gewichtsüberwachungssystem nach Anspruch 1, **dadurch gekennzeichnet, dass** die Datenverarbeitungseinheit dahingehend ausgebildet ist, optimale Werte für von der Gewichtsgröße ($F_1$, $F_2$) abhängige Fahrzeugparameter wie den Reifendruck oder die Scheinwerferneigung zu berechnen und diese dem Benutzer anzuzeigen oder ihre automatische Einstellung zu veranlassen.

5. Gewichtsüberwachungssystem nach Anspruch 1, **dadurch gekennzeichnet, dass** die Datenverarbeitungseinheit dahingehend ausgebildet ist, Vorschläge für eine derartige Änderung der Fahrzeugbeladung zu berechnen, dass der gemäß einer einprogrammierten Vorgabe maximal zulässige Wert der Gewichtsgröße ($F_1$, $F_2$) eingehalten wird.

6. Gewichtsüberwachungssystem nach einem der vorhergehenden Ansprüche, **dadurch gekennzeichnet, dass** dieses Sensoren für die auf jedes Rad wirkende Gewichtskraft aufweist.

7. Gewichtsüberwachungssystem nach einem der vorhergehenden Ansprüche, **dadurch gekennzeichnet, dass** dieses einen in der Anhängerkupplung des Kraftfahrzeugs angeordneten Zugkraftsensor sowie einen Beschleunigungssensor enthält, und dass die Datenverarbeitungseinheit dahingehend ausgebildet ist, aus der gemessenen Zugkraft ($F_3$) und der gemessenen Beschleunigung das Gewicht eines Anhängers (2) zu berechnen.

8. Gewichtsüberwachungssystem nach einem der vorhergehenden Ansprüche, **dadurch gekennzeichnet, dass** dieses eine Anzeigevorrichtung zur Darstellung von Benutzerinformationen aufweist.

9. Gewichtsüberwachungssystem nach einem der vorhergehenden Ansprüche, **dadurch gekennzeichnet, dass** die Datenverarbeitungseinheit mit einer Eingabeeinheit für Eingaben des Benutzers wie insbesondere einer geplanten Fahrtroute und/oder geplanten Beladung gekoppelt ist.

10. Gewichtsüberwachungssystem nach einem der vorhergehenden Ansprüche,
**dadurch gekennzeichnet, dass**
die Gewichtsgröße das Gesamtgewicht des Kraftfahrzeugs, die Nutzlast des Kraftfahrzeugs, das Gesamtgewicht des Zugverbandes bestehend aus Kraftfahrzeug und mindestens einem Anhänger, das Anhängergewicht, die vertikale Anhängerkupplungslast und/oder eine Achslast ist.

## Claims

1. Weight monitoring system for a motor vehicle (1), containing at least one sensor for a weight variable (F1, F2) and a data processing unit which is coupled thereto, **characterized in that** the data processing unit is designed to calculate the maximum permissible, location-dependent value of the weight variable (F1, F2) for a planned route in accordance with a programmed specification, and to monitor compliance with said value.

2. Weight monitoring system according to Claim 1, **characterized in that** said weight monitoring system contains a memory with navigation data in order to be able to determine the respective gradient and/or height above sea level of a predefined route.

3. Weight monitoring system according to Claim 2, **characterized in that** said weight monitoring system uses a GPS unit to determine the current location.

4. Weight monitoring system according to Claim 1, **characterized in that** the data processing unit is designed to calculate optimum values for vehicle parameters which are dependent on the weight variable (F1, F2), such as the tire pressure or the angle of inclination of the headlights, and to display the vehicle parameters to the user or to cause them to be automatically set.

5. Weight monitoring system according to Claim 1, **characterized in that** the data processing unit is designed to calculate proposals for such a change in the load of the vehicle that the maximum permissible value of the weight variable (F1, F2) in accordance with a programmed specification is complied with.

6. Weight monitoring system according to one of the preceding claims, **characterized in that** said weight monitoring system has sensors for the weight acting on each wheel.

7. Weight monitoring system according to one of the preceding claims, **characterized in that** said weight monitoring system contains a tractive force sensor arranged in the trailer hitch of the motor vehicle and an accelaration sensor, and wherein the data processing unit is designed to calculate the weight of a trailer (2) from the measured tractive force (F3) and the measured acceleration.

8. Weight monitoring system according to one of the preceding claims, **characterized in that** said weight monitoring system has a display device for representing user information.

9. Weight monitoring system according to one of the preceding claims, **characterized in that** the data processing unit is coupled to an input unit for inputs by the user, in particular a planned route and/or planned load.

10. Weight monitoring system according to one of the preceding claims, **characterized in that** the weight variable is the overall weight of the motor vehicle, the payload of the motor vehicle, the overall weight of the vehicle-trailer combination composed of the motor vehicle and at least one trailer, the trailer weight, the vertical trailer coupling load and/or an axle load.

## Revendications

1. Système de surveillance du poids pour un véhicule automobile (1), comprenant au moins un capteur pour une valeur de poids ($F_1$, $F_2$) ainsi qu'une unité de traitement de données connectée à celui-ci, **caractérisé en ce que** l'unité de traitement de données est configurée pour calculer, pendant un trajet prévu, une valeur maximale admissible de la valeur de poids ($F_1$, $F_2$), dépendante de l'endroit et conforme à une consigne programmée, et pour surveiller si elle est respectée.

2. Système de surveillance du poids selon la revendication 1, **caractérisé en ce que** celui-ci contient une mémoire avec des données de navigation pour pouvoir déterminer pour un trajet prédéfini la pente et/ou l'altitude au-dessus du niveau de la mer correspondantes.

3. Système de surveillance du poids selon la revendication 2, **caractérisé en ce que** celui-ci utilise une unité GPS pour déterminer l'emplacement actuel.

4. Système de surveillance du poids selon la revendication 1, **caractérisé en ce que** l'unité de traitement de données est configurée pour calculer des valeurs optimales pour les paramètres du véhicule qui dépendent de la valeur de poids ($F_1$, $F_2$), comme la pression des pneus ou l'inclinaison des phares, et pour les indiquer à l'utilisateur ou ordonner leur réglage automatique.

5. Système de surveillance du poids selon la revendication 1, **caractérisé en ce que** l'unité de traitement de données est configurée pour calculer des propositions pour une modification du chargement du véhicule de sorte que la valeur maximale admissible de la valeur de poids ($F_1$, $F_2$) selon une consigne programmée soit respectée.

6. Système de surveillance du poids selon l'une des revendications précédentes, **caractérisé en ce que** celui-ci présente des capteurs pour le poids qui agit sur chaque roue.

7. Système de surveillance du poids selon l'une des revendications précédentes, **caractérisé en ce que** celui-ci contient un capteur de force de traction disposé dans l'accouplement pour remorque du véhicule automobile ainsi qu'un capteur d'accélération et **en ce que** l'unité de traitement de données est configurée pour calculer le poids d'une remorque (2) à partir de la force de traction ($F_3$) mesurée et de l'accélération mesurée.

8. Système de surveillance du poids selon l'une des revendications précédentes, **caractérisé en ce que** celui-ci présente un dispositif d'affichage pour représenter des informations d'utilisateur.

9. Système de surveillance du poids selon l'une des revendications précédentes, **caractérisé en ce que** l'unité de traitement de données est connectée à une unité de saisie pour la saisie par l'utilisateur notamment d'un trajet prévu et/ou d'un chargement prévu.

10. Système de surveillance du poids selon l'une des revendications précédentes, **caractérisé en ce que** la valeur du poids est le poids total du véhicule automobile, la charge utile du véhicule automobile, le poids total de l'attelage composé du véhicule et d'au moins une remorque, le poids de la remorque, la charge verticale de l'accouplement pour remorque et/ou une charge d'essieu.

$s_{max}$

$H_{max}$

NN

1

2

$F_1$

$F_2$

$F_3$

$F_4$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8702121 A
- EP 0769402 A
- WO 9309510 A
- DE 4300677 A